# EUROPEAN PATENT APPLICATION

(11) **EP 3 751 431 A1**
(43) Date of publication of application: **16.12.2020**
(21) Application number: 18908135.9
(22) Date of filing: 28.02.2018
(51) Int. Cl.: G06F 16/48, G06K 9/46, H04N 13/332

(54) **TERMINAL SEARCHING FOR VR RESOURCE BY MEANS OF IMAGE**

(71) Applicant: HUAWEI TECHNOLOGIES CO., LTD., Shenzhen, Guangdong 518129 (CN)
(72) Inventor: ZHU, Jinlin, Shenzhen, Guangdong 518129 (CN); GUO, Xiaojie, Shenzhen, Guangdong 518129 (CN); LI, Zhan, Shenzhen, Guangdong 518129 (CN)
(74) Representative: MERH-IP Matias Erny Reichl Hoffmann Patentanwälte PartG mbB
(86) International application number: PCT/CN2018/077650
(87) International publication number: WO 2019/165610

(57) **Abstract**

This application provides a method for obtaining a virtual reality VR resource by a terminal and a terminal, and relates to the field of communications technologies, so that the terminal can quickly and conveniently find a VR resource required by a user, to improve user experience. The method specifically includes: when a terminal detects an operation of choosing, by a user, to search for a VR resource related to a specific picture, automatically obtaining, by the terminal, feature information of the specific picture, and generating a request based on the feature information; sending, by the terminal, the request to a VR server; and then receiving, by the terminal, a list of related VR resources found by the VR server through matching based on the request.

## Description

### TECHNICAL FIELD

This application relates to the field of communications technologies, and in particular, to a method for obtaining a virtual reality VR resource by a terminal and a terminal.

### BACKGROUND

With popularization of mobile terminals, it is a trend that the mobile terminal can support a virtual reality (Virtual Reality, VR) technology, so that a common user can directly use the mobile terminal to watch a VR resource provided by a content provider. The VR resource includes VR content such as a VR video, a VR movie, and a VR game.

Currently, a user needs to use a mobile terminal to log in to a website or an application provided by a content provider, and enter a corresponding VR section, for example, "VR Panorama" in "Channel" in a Youku video application. Then, the user enters a keyword such as a program name, a label, or a producer of a VR resource, to find the VR resource that the user expects to search for, namely, a target VR resource. However, in an actual use process of the user, such a case often occurs: If the keyword entered by the user cannot well match the target VR resource, a related VR resource cannot be found. If the keyword entered by the user is too common, too many related VR resources may be found, and the user needs to further filter the resources. It can be learned that existing operations of searching for the VR resource is very time-consuming, and user experience is poor.

### SUMMARY

This application provides a method for obtaining a virtual reality VR resource by a terminal and a terminal, so that the terminal can quickly and conveniently find a VR resource required by a user, to improve user experience.

According to a first aspect, a method provided in this application includes: detecting, by a terminal, a first operation performed by a user on a first picture; generating, by the terminal, a first request based on the first picture in response to the first operation, where the first request is used to request to obtain a virtual reality VR resource corresponding to the first picture; sending, by the terminal, the first request to a VR server; and receiving, by the terminal, a VR resource returned by the VR server based on the first request.

The first operation is an operation of requesting, by the user, to search for a VR resource related to the first picture, and may be requesting to search for a common VR resource related to the first picture, or may be specifically requesting to search for a VR resource related to a geographical location in the first picture, or requesting to search for a VR resource related to a landmark building or a scenic spot in the first picture, or requesting to search for a VR resource related to a logo icon in the first picture, or requesting to search for a VR resource related to a person's portrait in the first picture, or the like. This is not limited in this embodiment of this application.

The first operation may be an operation, or may be a series of operations. For example, the first operation may be an operation such as double tapping, tapping, touching and holding, sliding, or selecting a menu option performed on a screen on which the first picture is viewed. Alternatively, the first operation may include an operation of selecting the first picture, opening a VR resource search menu, or selecting a corresponding option by the user.

The first request carries feature information of the first picture, and the feature information of the first picture may be text information, picture information, character information, character string information, or the like. The first request may carry the feature information of the first picture by using the hypertext transfer protocol (HyperText Transfer Protocol, HTTP) protocol, or a text transmission carrier such as JavaScript object notation (JavaScript Object Notation, JSON) or an extensible markup language (XML).

The virtual reality VR resource includes any one or more of a VR video, a VR game, and a VR movie.

It can be learned that in the method provided in this application, the terminal may automatically search, based on the first picture, the VR resource related to the first picture, to simplify a user operation, improve search accuracy, and improve user experience.

In a possible design, the VR server is an application server storing VR resources, or a management server corresponding to a storage device storing VR resources.

In a possible design, the detecting, by a terminal, a first operation performed by a user on a first picture is specifically: detecting, by the terminal, the first operation on a first screen, where the first interface is a browsing screen of the first picture.

For example, the first screen may be a screen that is in an "album" application in the terminal and on which the first picture is viewed, or a screen on which the first picture is viewed when the terminal browses a social web page or runs a social application (for example, a "WeChat" application). This is not limited in this application.

In a possible design, the detecting the first operation on a first screen includes: detecting one of the following operations at any location of the first screen: touching and holding, tapping, double tapping, and dragging; or detecting an operation of selecting an option in a preset single-level or multi-level menu on the first screen; or when a function of automatically searching for a VR resource of the terminal is enabled, detecting that the first picture is in a browsed state for more than preset duration.

In a possible design, the detecting, by a terminal, a first operation performed by a user on a first picture is specifically: detecting, by the terminal, the first operation on a second screen, where a file of the first picture is selected on the second screen, and the second screen is a screen on which the file of the first picture is displayed.

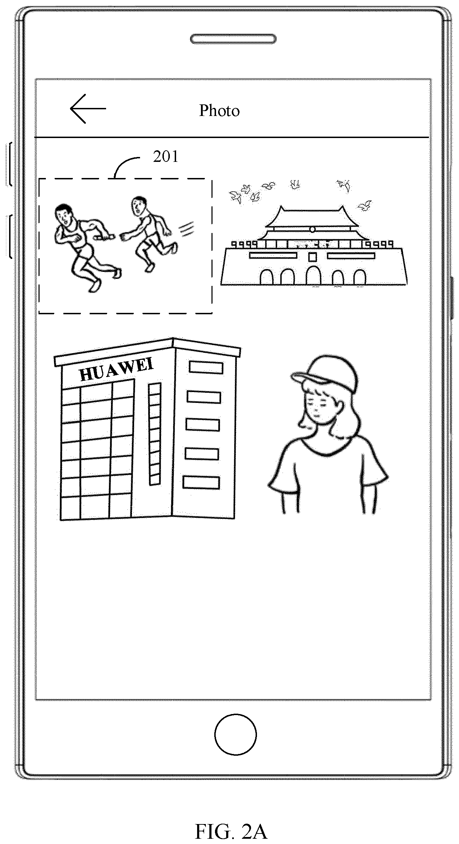

For example, the second screen may be a screen that is in an "album" application in the terminal and on which the file of the first picture is displayed, or may be a screen that includes a thumbnail of the first picture, for example, a screen shown in FIG. 2A. Alternatively, the second screen may be a screen on which the file of the first picture is displayed when the terminal browses a social web page or runs a social application (for example, a "WeChat" application), for example, a screen that includes a thumbnail of the first picture. This is not limited in this application.

In a possible design, the detecting, by the terminal, the first operation on a second screen includes: detecting one of the following operations at a preset location of the second screen: touching and holding, tapping, and double tapping; or detecting an operation of selecting an option in a preset single-level or multi-level menu on the second screen.

In a possible design, the generating, by the terminal, a first request based on the first picture includes: obtaining, by the terminal, feature information of the first picture; and generating, by terminal, the first request based on the feature information of the first picture, where the first request carries the feature information of the first picture.

The feature information of the picture includes but is not limited to a geographical location or longitude and latitude data of a photographing location of the picture, a name or location information of a landmark building or a scenic spot included in the picture, logo icon information included in the picture, person information included in the picture, or the like.

In some embodiments, the terminal may obtain the geographical location or the latitude and longitude data of the photographing location of the picture from the information about the picture. Based on an image recognition technology, the terminal may automatically extract an image from a specific picture, and compare the image with an image of a landmark building or a scenic spot that is stored in the terminal or stored in a third-party device, to determine landmark building information or scenic spot information included in the specific picture. For example, the terminal may determine a label or the like corresponding to the landmark building or the scenic spot. The label may be a name of the landmark building or the scenic spot, for example, Tiananmen or Great Wall. The label may alternatively be a classification of the landmark building or the scenic spot, for example, a humanistic scenic spot or natural scenery. Similarly, based on an image recognition technology, the terminal may automatically extract an image from a specific picture, and compare the image with a logo icon that is of a group organization/social institution and that is stored in the terminal or stored in a third-party device, to determine logo icon information included in the specific picture. For example, the terminal may determine a label or the like corresponding to the logo icon. For example, the label may be a name that is of the group organization/social institution and group organization/social institution and that corresponds to the logo icon, or an industry to which the group organization/social institution belongs. Alternatively, based on a facial recognition technology, the terminal may automatically extract an image from a specific picture, and compare the image with a person's portrait stored in the terminal or stored in a third-party device, to determine person information included in the specific picture. For example, the terminal may determine a label or the like corresponding to a person. For example, the label may be a name of the person, or may be an industry to which the person belongs.

In a possible design, the VR resource returned by the VR server based on the first request includes a VR resource list including one or more VR resources, and the one or more VR resources are VR resources found by the VR server through matching based on the first request. The method in this application further includes: displaying, by the terminal, the VR resource list.

Information about the VR resource returned by the server may correspond to one VR resource on the server. The information about the VR resource includes but is not limited to a uniform resource identifier (Uniform Resource Identifier, URI) of the VR resource, a uniform resource locator (Uniform Resource Locator, URL) of the VR resource, and some basic information of the VR resource, for example, a program name, a producer, a production time, information about a classification label, a poster, and some image pictures in the VR resource.

In some embodiments, the terminal displays a URI or a URL of the found VR resource based on the information about the VR resource returned by the server, or the terminal may display any several pieces of information such as a poster, a program name, a producer, a production time, an introduction, and some image pictures in the VR resource corresponding to the found VR resource. Content that is of the VR resource and that is displayed by the terminal is not limited in this application.

In a possible design, the method further includes: receiving, by the terminal, a second operation performed by the user, where the second operation is selecting a VR resource from the VR resource list by the user; and obtaining, by the terminal in response to the second operation, the VR resource selected by the user.

The second operation is an operation of choosing, by the user, to view the VR resource, for example, may be tapping a poster or a name of a VR resource by the user. After receiving the operation of choosing, by the user, to view the VR resource, the terminal sends a VR resource viewing request to the server.

According to a second aspect, a method provided in this application includes: detecting, by a terminal, a first operation performed by a user on a first picture; obtaining, by the terminal, feature information of the first picture in response to the first operation; and locally obtaining, by the terminal based on the feature information of the first picture, a virtual reality VR resource corresponding to the first picture.

It can be learned that in the method provided in this application, the terminal may automatically extract the feature information from the picture, and then search, based on the feature information of the picture, for the VR resource related to the feature information, to simplify a user operation, improve search accuracy, and improve user experience.

According to a third aspect, a terminal is provided, and includes: a detection unit, configured to detect a first operation performed by a user on a first picture; a processing unit, configured to generate a first request based on the first picture in response to the first operation, where the first request is used to request to obtain a virtual reality VR resource corresponding to the first picture; a sending unit, configured to send the first request to a VR server; and a receiving unit, configured to receive a VR resource returned by the VR server based on the first request.

In a possible design, the VR server is an application server storing VR resources, or a management server corresponding to a storage device storing VR resources.

In a possible design, the detection unit is specifically configured to detect the first operation on a first screen, where the first screen is a browsing screen of the first picture.

In a possible design, the first operation includes: one of the following operations detected at any location of the first screen: touching and holding, tapping, double tapping, and dragging; or an operation of selecting an option in a preset single-level or multi-level menu on the first screen; or when a function of "automatically searching for the VR resource" of the terminal is enabled, detecting that the first picture is in a browsed state for more than preset duration.

In a possible design, the detection unit is specifically configured to detect the first operation on a second screen, where a file of the first picture is selected on the second screen, and the second screen is a screen on which the file of the first picture is displayed

In a possible design, the first operation includes: one of the following operations detected at any location of the second screen: touching and holding, tapping, and double tapping; or an operation of selecting an option in a preset single-level or multi-level menu on the second screen.

In a possible design, that a processing unit generates a first request based on the first picture is specifically: obtaining, by the processing unit, feature information of the first picture; and generating the first request based on the feature information of the first picture, where the first request carries the feature information of the first picture.

In a possible design, the feature information includes any one or more of geographical location information, landmark building information, scenic spot information, a logo icon, and person's portrait information.

In a possible design, the virtual reality VR resource includes any one or more of a VR video, a VR game, and a VR movie.

In a possible design, the VR resource returned by the VR server based on the first request includes a VR resource list including one or more VR resources, and the one or more VR resources are VR resources found by the VR server through matching based on the first request. The terminal further includes: a display unit, configured to display the VR resource list.

In a possible design, the detection unit is further configured to detect a second operation performed by the user, where the second operation is selecting a VR resource from the VR resource list by the user; and the processing unit is further configured to: when the second operation is detected, obtain the VR resource selected by the user.

According to a fourth aspect, a terminal is provided, and includes a processor, a memory, and a touchscreen. The memory and the touchscreen are coupled to the processor, the memory is configured to store computer program code, the computer program code includes a computer instruction, and the processor reads the computer instruction from the memory to perform the method according to any possible design method in the first aspect.

According to a fifth aspect, a computer storage medium is provided, and includes a computer instruction. When the computer instruction is run on a terminal, the terminal is enabled to perform the method according to any possible design method in the first aspect.

According to a sixth aspect, a computer program product is provided. When the computer program product is run on a computer, the computer is enabled to perform the method according to any possible design method in the first aspect.

### BRIEF DESCRIPTION OF DRAWINGS

FIG. 1A is a schematic structural diagram of a communications system according to this application;
FIG. 1B is a schematic structural diagram 1 of a terminal according to this application;
FIG. 2A is a schematic diagram 1 of an instance of a terminal screen according to this application;
FIG. 2B is a schematic diagram 2 of an instance of a terminal screen according to this application;
FIG. 2C is a schematic diagram 3 of an instance of a terminal screen according to this application;
FIG. 2D is a schematic diagram 4 of an instance of a terminal screen according to this application;
FIG. 2E is a schematic diagram 5 of an instance of a terminal screen according to this application;
FIG. 2F is a schematic diagram 6 of an instance of a terminal screen according to this application;
FIG. 2G is a schematic diagram 7 of an instance of a terminal screen according to this application;
FIG. 2H is a schematic diagram 8 of an instance of a terminal screen according to this application;
FIG. 2I is a schematic diagram 9 of an instance of a terminal screen according to this application;
FIG. 2J is a schematic diagram 10 of an instance of a terminal screen according to this application;
FIG. 2K is a schematic diagram 11 of an instance of a terminal screen according to this application;
FIG. 2L is a schematic diagram 12 of an instance of a terminal screen according to this application;
FIG. 3A is a schematic flowchart 1 of a method for obtaining a VR resource according to this application;
FIG. 3B is a schematic flowchart 2 of a method for obtaining a VR resource according to this application;
FIG. 4 is a schematic flowchart 3 of a method for obtaining a VR resource according to this application;
FIG. 5 is a schematic flowchart 4 of a method for obtaining a VR resource according to this application;
FIG. 6 is a schematic flowchart 5 of a method for obtaining a VR resource according to this application;
FIG. 7 is a schematic flowchart 6 of a method for obtaining a VR resource according to this application;
FIG. 8 is a schematic flowchart 7 of a method for obtaining a VR resource according to this application;
FIG. 9 is a schematic structural diagram 2 of a terminal according to this application; and
FIG. 10 is a schematic structural diagram 3 of a terminal according to this application.

### DESCRIPTION OF EMBODIMENTS

With development of VR technologies, content of VR resources relates to various aspects of life of a common user, for example, entertainment, transportation, tourism, and training. How to enable a user to quickly and conveniently find, from a variety of VR resources by using a terminal, a VR resource required by the user is an urgent problem that needs to be resolved currently.

For example, picture sharing has become a daily habit of the user, and the user usually views, by using a social application in a terminal, a picture shared by another user, for example, a photo taken by the another user during travel. After viewing the photo, the user may be attracted by the photo, and expects to further learn of a scenic spot in which the photo is taken. In this case, the user may think of viewing a VR resource related to the scenic spot in which the photo is taken, for example, a related video or movie. However, the user may not know a name or an address of the scenic spot in which the photo is taken, or even a search keyword that needs to be used to search for the related VR resource. Therefore, the embodiments of this application provide a method for obtaining a VR resource by a terminal.

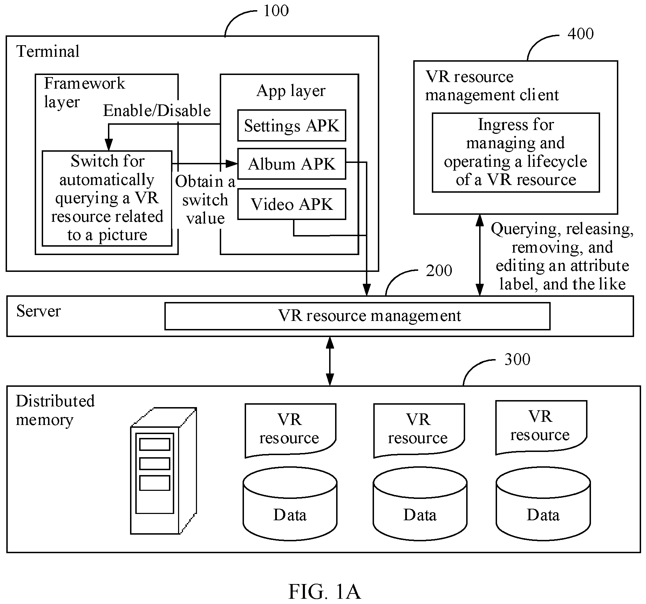

FIG. 1A is an architectural diagram of a communications system according to an embodiment of this application. The communications system includes a terminal 100 and a server 200. The communications system may further include a distributed memory 300 and a VR resource management client 400.

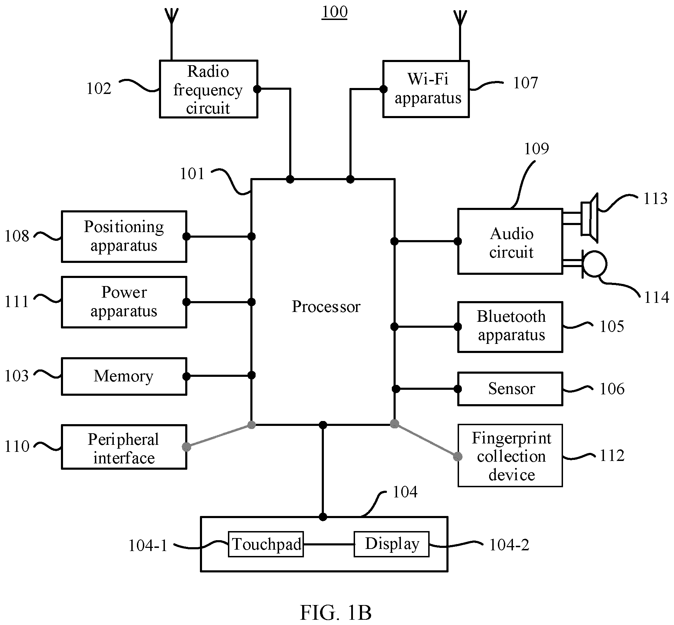

The terminal 100 may be a mobile phone (for example, a mobile phone 100 shown in FIG. 1B), a tablet computer, a personal computer (Personal Computer, PC), a personal digital assistant (personal digital assistant, PDA), a smartwatch, a netbook, a wearable electronic device, an augmented reality (Augmented Reality, AR) technology device, a virtual reality (Virtual Reality, VR) device, or the like. A specific form of the terminal 100 is not specifically limited in this application.

In some embodiments of this application, a function of automatically querying a picture-related VR resource may be enabled or disabled in a "setting" application in the terminal 100 according to an instruction of a user. If the terminal enables the function of automatically querying a picture-related VR resource, the terminal may query, based on an operation performed by the user in an "album" application, a VR resource related to a specific picture. A specific query process is described below.

The server 200 is configured to: be responsible for background management such as releasing a VR resource, removing a VR resource, and editing an attribute label, and provide services such as automatic matching, searching, and latest pushing of the VR resource. The server 200 may be an application server storing VR resources, or may be a management server corresponding to a storage system storing VR resources. The management server may be configured to: manage VR resources and provide a service of performing exact matching for a VR resource. The server 200 may alternatively be another electronic device storing VR resources.

The distributed memory 300 is responsible for storing massive VR resources.

The VR resource management client 400 provides a display screen of management functions such as releasing and removing the VR resource, and marking the attribute label, so that an administrator that operates the VR resource performs an operation.

As shown in FIG. 1B, an example in which a mobile phone is used as the terminal 100 is used. The terminal 100 may specifically include a processor 101, a radio frequency circuit 102, a memory 103, a touchscreen 104, a Bluetooth 105, a sensor 106, a Wi-Fi apparatus 107, a positioning apparatus 108, an audio circuit 109, a peripheral interface 110, a power apparatus 111, a fingerprint collection device 112, a speaker 113, and a microphone 114.

The processor 101 is a control center of the terminal 100. The processor 101 is connected to all parts of the terminal 100 by using various interfaces and lines, and performs various functions of the terminal 100 and data processing by running or executing an application stored in the memory 103 and invoking data stored in the memory 103. In some embodiments, the processor 101 may include one or more processing units. For example, the processor 101 may be a chip Kirin 960 manufactured by Huawei Technologies Co., Ltd.

The radio frequency circuit 102 may be configured to: receive and send a radio signal in an information receiving/sending process or a call process. Particularly, after receiving downlink data from a base station, the radio frequency circuit 102 may send the downlink data to the processor 101 for processing, and sends related uplink data to the base station. Usually, the radio frequency circuit includes but is not limited to an antenna, at least one amplifier, a transceiver, a coupler, a low noise amplifier, a duplexer, and the like. In addition, the radio frequency circuit 102 may further communicate with another device through wireless communication. The wireless communication may use any communications standard or protocol, including but not limited to a global system for mobile communications, a general packet radio service, code division multiple access, wideband code division multiple access, long term evolution, an email, a short message service, and the like.

The memory 103 is configured to store the application and the data. The processor 101 performs various functions of the terminal 100 and data processing by running the application and the data that are stored in the memory 103. The memory 103 mainly includes a program storage area and a data storage area. The program storage area may store an operating system, and an application required by at least one function (for example, a sound playing function or an image playing function). The data storage area may store data (for example, audio data or a phone book) created based on use of the terminal 100. In addition, the memory 103 may include a high-speed random access memory (Random Access Memory, RAM), and may further include a nonvolatile memory such as a magnetic disk storage device, a flash storage device, or another volatile solid-state storage device. The memory 103 may store various operating systems such as an iOS® operating system developed by Apple and an Android® operating system developed by Google. The memory 103 may be independent, and is connected to the processor 101 by using the communications bus; or the memory 103 may be integrated into the processor 101.

The touchscreen 104 may specifically include a touchpad 104-1 and a display 104-2.

The touchpad 104-1 may collect a touch event (for example, an operation performed by a user of the terminal 100 on the touchpad 104-1 or near the touchpad 104-1 by using any proper object such as a finger or a stylus) performed by the user on or near the touchpad 104-1, and send collected touch information to another device (for example, the processor 101). The touch event performed by the user near the touchpad 104-1 may be referred to as a floating touch. The floating touch may mean that the user does not need to directly touch the touchpad to select, move, or drag an object (for example, an icon), and the user only needs to be near a device to perform a desired function. In addition, the touchpad 104-1 may be implemented in a plurality of types such as a resistive type, a capacitive type, an infrared type, and a surface acoustic wave type.

The display (also referred to as a display) 104-2 may be configured to display information entered by the user or information provided for the user, and various menus of the terminal 100. The display 104-2 may be configured in a form of a liquid crystal display, an organic light emitting diode, or the like. The touchpad 104-1 may cover the display 104-2. When detecting the touch event on or near the touchpad 104-1, the touchpad 104-1 transfers the touch event to the processor 101 to determine a type of the touch event. Then, the processor 101 can provide corresponding visual output on the display 104-2 based on the type of the touch event. In FIG. 1B, the touchpad 104-1 and the display 104-2 serve as two independent components to implement input and output functions of the terminal 100. However, in some embodiments, the touchpad 104-1 and the display 104-2 may be integrated to implement the input and output functions of the terminal 100. It may be understood that the touchscreen 104 is formed by stacking a plurality of layers of materials. In this embodiment of this application, only the touchpad (layer) and the display (layer) are displayed, and another layer is not recorded in this embodiment of this application. In addition, the touchpad 104-1 may be disposed on a front side of the terminal 100 in a full panel form, and the display 104-2 may also be disposed on the front side of the terminal 100 in a full panel form. In this way, a bezel-less structure can be implemented on the front side of the mobile phone.

In addition, the terminal 100 may further have a fingerprint recognition function. For example, the fingerprint recognizer 112 may be disposed on a rear side (for example, below a rear-facing camera) of the terminal 100, or the fingerprint recognizer 112 may be disposed on a front side (for example, below the touchscreen 104) of the terminal 100. For another example, the fingerprint collection device 112 may be disposed on the touchscreen 104 to implement the fingerprint recognition function. In other words, the fingerprint collection device 112 may be integrated into the touchscreen 104 to implement the fingerprint recognition function of the terminal 100. In this case, the fingerprint collection device 112 is disposed on the touchscreen 104, and may be a part of the touchscreen 104, or may be disposed on the touchscreen 104 in another manner. A main component of the fingerprint collection device 112 in this embodiment of this application is a fingerprint sensor. The fingerprint sensor may use any type of sensing technology, including but not limited to an optical sensing technology, a capacitive sensing technology, a piezoelectric sensing technology, an ultrasonic sensing technology, or the like.

The terminal 100 may further include the Bluetooth apparatus 105, configured to exchange data between the terminal 100 and another short-distance device (for example, a mobile phone or a smartwatch).

The terminal 100 may further include at least one sensor 106, such as a light sensor, a motion sensor, and another sensor. Specifically, the light sensor may include an ambient light sensor and a proximity sensor. The ambient light sensor may adjust luminance of the display of the touchscreen 104 based on intensity of ambient light. The proximity sensor may power off the display when the terminal 100 moves to an ear. As one type of the motion sensor, an accelerometer sensor may detect acceleration values in all directions (usually on three axes). The accelerometer sensor may detect a value and a direction of gravity when the accelerometer sensor is stationary, and may be used in an application for recognizing a mobile phone posture (such as switching between a landscape mode and a portrait mode, a related game, or magnetometer posture calibration), a function related to vibration recognition (such as a pedometer or a knock), or the like. For another sensor that may be further disposed on the terminal 100, such as a gyroscope, a barometer, a hygrometer, a thermometer, or an infrared sensor, details are not described herein.

The Wi-Fi apparatus 107 is configured to provide network access complying with a Wi-Fi related standard and protocol for the terminal 100. The terminal 100 may access a Wi-Fi access point by using the Wi-Fi apparatus 107, to help the user receive and send emails, browse a web page, access streaming media, and the like. The Wi-Fi apparatus 107 provides wireless broadband internet access for the user. In some other embodiments, the Wi-Fi apparatus 107 may also be used as a Wi-Fi wireless access point, to provide Wi-Fi network access for another device.

The positioning apparatus 108 is configured to provide a geographical location for the terminal 100. It may be understood that the positioning apparatus 108 may be specifically a receiver of a positioning system such as a global positioning system (Global Positioning System, GPS), a BeiDou navigation satellite system, or a Russian GLONASS. After receiving the geographical location sent by the positioning system, the positioning apparatus 108 sends the information to the processor 101 for processing, or sends the information to the memory 103 for storage. In some other embodiments, the positioning apparatus 108 may alternatively be a receiver of an assisted global positioning system (Assisted Global Positioning System, AGPS). The AGPS system serves as an assisted server to assist the positioning apparatus 108 in completing ranging and positioning services. In this case, the assisted positioning server communicates with a device such as the positioning apparatus 108 (namely, the GPS receiver) of the terminal 100 through a wireless communications network, to provide positioning assistance. In some other embodiments, the positioning apparatus 108 may alternatively be an apparatus using a positioning technology based on a Wi-Fi access point. Because each Wi-Fi access point has a globally unique media access control (Media Access Control, MAC) address, the device can scan and collect broadcast signals of nearby Wi-Fi access points when Wi-Fi is enabled, and therefore can obtain MAC addresses that are broadcast by the Wi-Fi access points. The device sends, to a location server through a wireless communications network, data (for example, the MAC addresses) that can identify the Wi-Fi access points. The location server retrieves a geographical location of each Wi-Fi access point, obtains the geographical location of the device through calculation with reference to strength of the Wi-Fi broadcast signals, and sends the geographical location to the positioning apparatus 108 of the device.

The audio circuit 109, the speaker 113, and the microphone 114 may provide an audio interface between the user and the terminal 100. The audio circuit 109 may convert received audio data into an electrical signal and then transmit the electrical signal to the speaker 113, and the speaker 113 converts the electrical signal into a sound signal for output. In addition, the microphone 114 converts a collected sound signal into an electrical signal. The audio circuit 109 receives the electrical signal, converts the electrical signal into audio data, and then outputs the audio data to the RF circuit 102, to send the audio data to, for example, another mobile phone, or outputs the audio data to the memory 103 for further processing.

The peripheral interface 110 is configured to provide various interfaces for an external input/output device (for example, a keyboard, a mouse, an external display, an external memory, or a subscriber identification module card). For example, the peripheral interface 110 is connected to the mouse by using a universal serial bus (Universal Serial Bus, USB) interface, and is connected, by using a metal contact on a card slot of the subscriber identification module card, to the subscriber identification module (Subscriber Identification Module, SIM) card provided by a telecommunications operator. The peripheral interface 110 may be configured to couple the external input/output peripheral device to the processor 101 and the memory 103.

The terminal 100 may further include the power apparatus 111 (for example, a battery or a power management chip) that supplies power to the components. The battery may be logically connected to the processor 101 by using the power management chip, to implement functions such as charging management, discharging management, and power consumption management by using the power apparatus 111.

Although not shown in FIG. 1B, the terminal 100 may further include a camera (a front-facing camera and/or a rear-facing camera), a flash, a micro projection apparatus, a near field communication (Near Field Communication, NFC) apparatus, and the like. Details are not described herein.

All methods in the following embodiments may be implemented in the terminal 100 having the foregoing hardware structure.

First, FIG. 2A to FIG. 2L are example diagrams of terminal screens according to an embodiment of this application. Details are as follows:

FIG. 2A shows a screen displayed by a terminal in response to detecting an operation of enabling an "album" application by a user. The screen includes thumbnails of a plurality of photos.

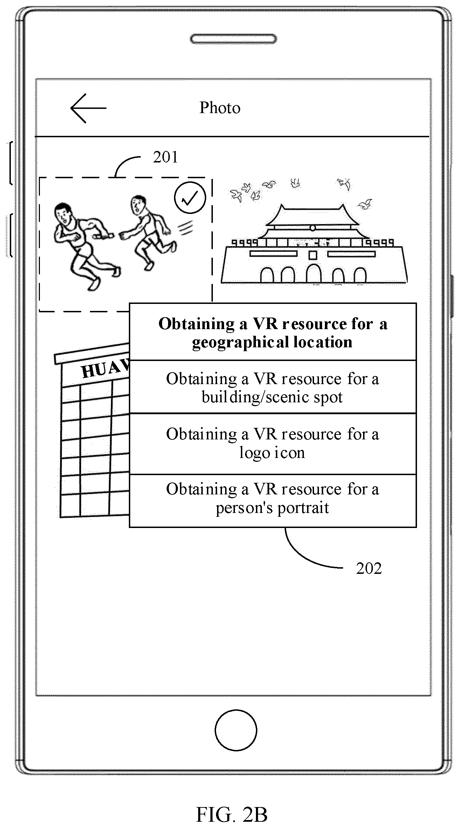

FIG. 2B shows a screen displayed by a terminal in response to detecting an operation of opening a VR search menu by a user. The screen includes an option menu 202.

For example, the option menu may include "obtaining a VR resource related to a geographical location", "obtaining a VR resource related to a building/scenic spot", "obtaining a VR resource related to a picture logo", "obtaining a VR resource related to a person's portrait", and the like.

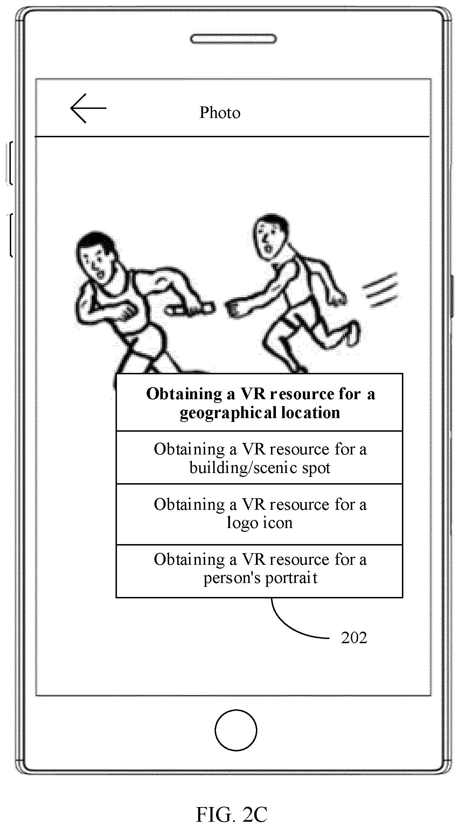

For example, the operation of opening the VR search menu by the user may be: selecting a specific picture (for example, a photo 201) on the screen in FIG. 2A, and then operating a corresponding option menu. The operation may alternatively be touching and holding a specific picture, or directly operating a corresponding selection menu. The operation may alternatively be an operation such as double tapping, tapping, touching and holding, or selecting a menu option performed by the user on a screen on which the user views a specific picture, for example, a screen shown in FIG. 2C. The operation of opening the VR search menu by the user and a screen that is of the terminal and on which the VR search menu is opened are not limited in this embodiment of this application.

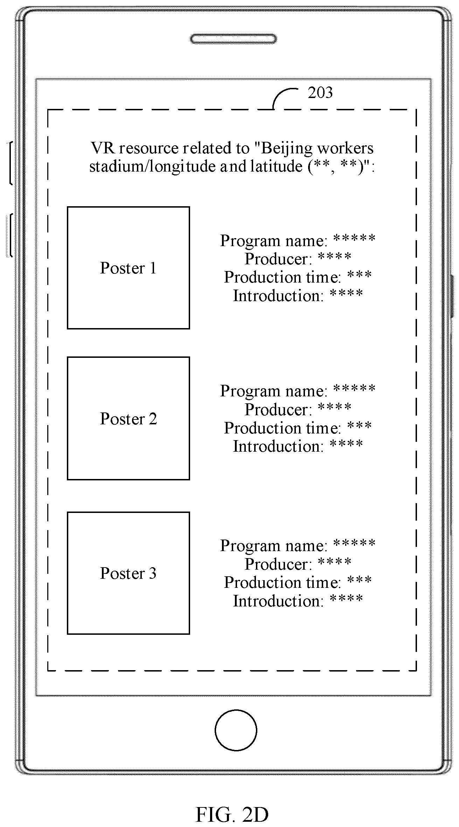

FIG. 2D shows a screen displayed by a terminal in response to an operation of selecting an option "obtaining a VR resource related to a geographical location" by a user. The screen includes a VR resource list 203 found by the terminal.

A VR resource in the VR resource list 203 is a resource related to a geographical location in the photo 201. The geographical location may be a photographing location of the photo 201, and may be specifically longitude and latitude, or may be an address or a name. For example, a photographing location of the VR resource in the VR resource list 203 may be the same as the photographing location of the photo 201, or may include the photographing location of the photo 201. A name of the photographing location of the VR resource in the VR resource list 203 may be the same as or similar to a name of the photographing location of the photo 201. Content of the VR resource related to the geographical location in the photo 201 is not limited in this embodiment of this application.

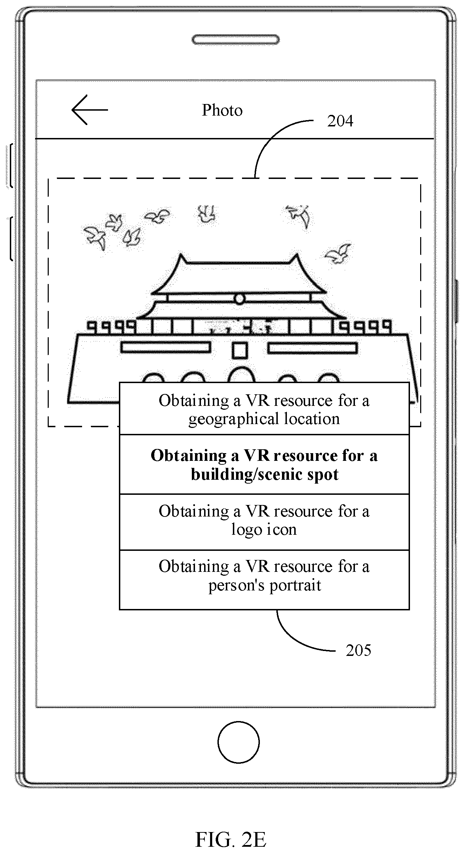

FIG. 2E shows a screen displayed by a terminal in response to an operation of choosing, by a user on a screen on which the user views a picture 204, to open a VR search menu. The screen includes an option menu 205.

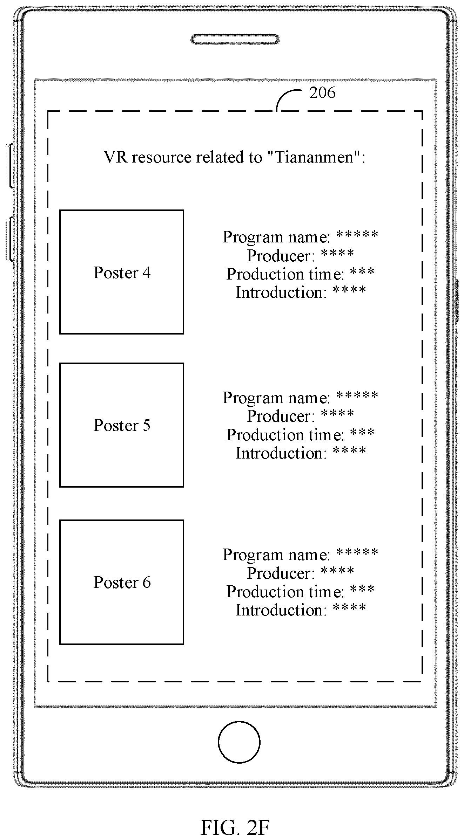

FIG. 2F shows a screen displayed by a terminal in response to an operation of selecting an option "obtaining a VR resource related to a building/scenic spot" by a user. The screen includes a VR resource list 206 found by the terminal. A VR resource in the VR resource list 206 is a resource related to a building or a scenic spot in the photo 204. For example, a photographing location of the VR resource in the VR resource list 206 may be a location that is the same as or near a photographing location of the picture 204, or may be a video, a movie, or the like related to a name of a building or a scenic spot. Content of the VR resource related to the building/scenic spot in the photo 204 is not limited in this embodiment of this application.

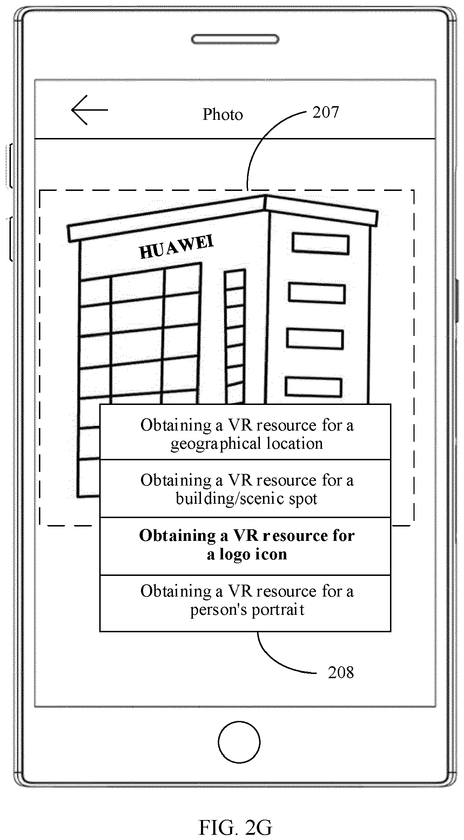

FIG. 2G shows a screen displayed by a terminal in response to an operation of choosing, by a user on a screen on which the user views a picture 207, to open a VR search menu. The screen includes an option menu 208.

FIG. 2F shows a screen displayed by a terminal in response to an operation of selecting an option "obtaining a VR resource related to a logo icon" by a user. The screen includes a VR resource list 209 found by the terminal. A VR resource in the VR resource list 209 is a resource related to a logo icon in the photo 207. For example, the VR resource in the VR resource list 208 may include the logo icon in the picture 207, or may be a video, a movie, or the like related to an organization of the logo icon or the like. Content of the VR resource related to the logo icon in the photo 207 is not limited in this embodiment of this application.

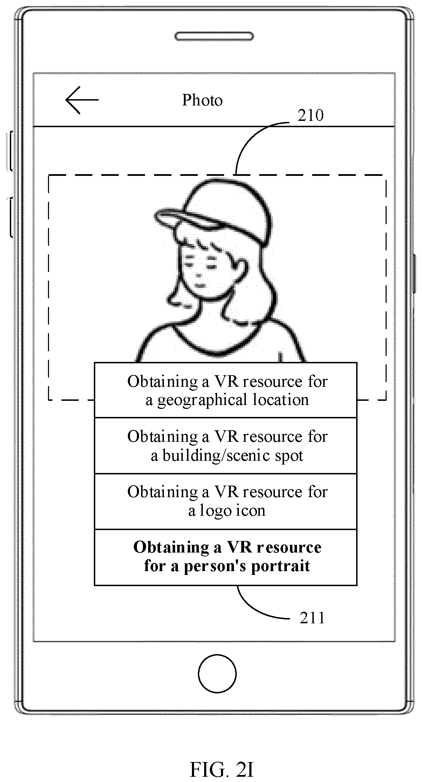

FIG. 2I shows a screen displayed by a terminal in response to an operation of choosing, by a user on a screen on which the user views a picture 210, to open a VR search menu. The screen includes an option menu 211.

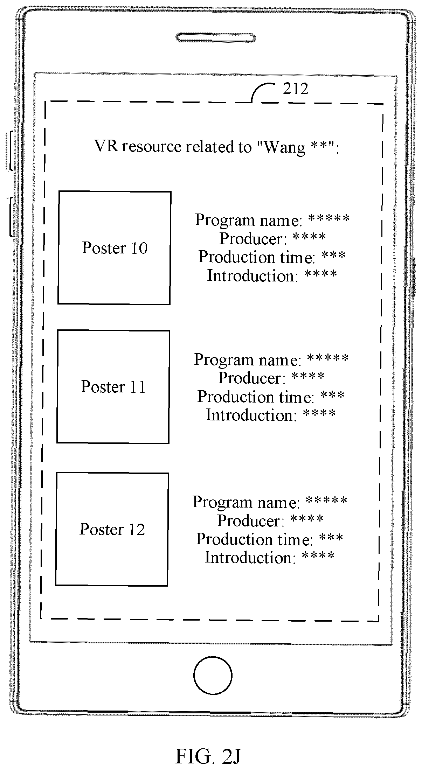

FIG. 2J shows a screen displayed by a terminal in response to an operation of selecting an option "obtaining a VR resource related to a person's portrait" by a user. The screen includes a VR resource list 211 found by the terminal. A VR resource in the VR resource list 211 is a resource related to a person's portrait in the photo 210. For example, the VR resource in the VR resource list 211 includes a person in the picture 210, or may be a video, a movie, or the like related to the person. Content of the VR resource related to the person in the photo 210 is not limited in this embodiment of this application.

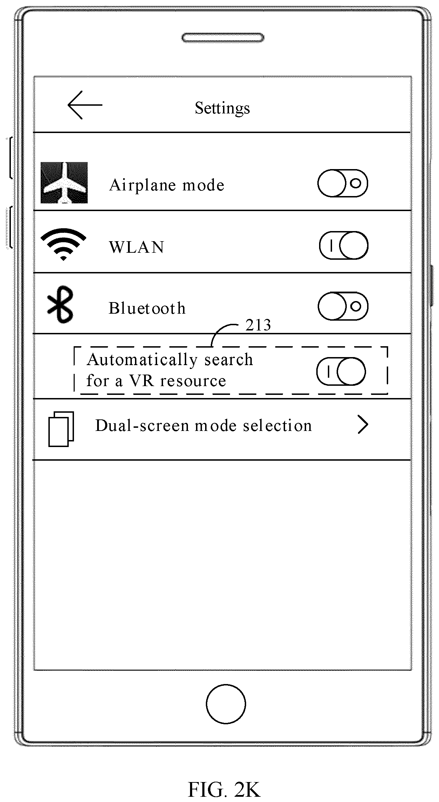

FIG. 2K shows a setting screen displayed by a terminal. The setting screen includes a button 213. After detecting that a user taps the button 213, the terminal enables a function of automatically searching for a VR resource.

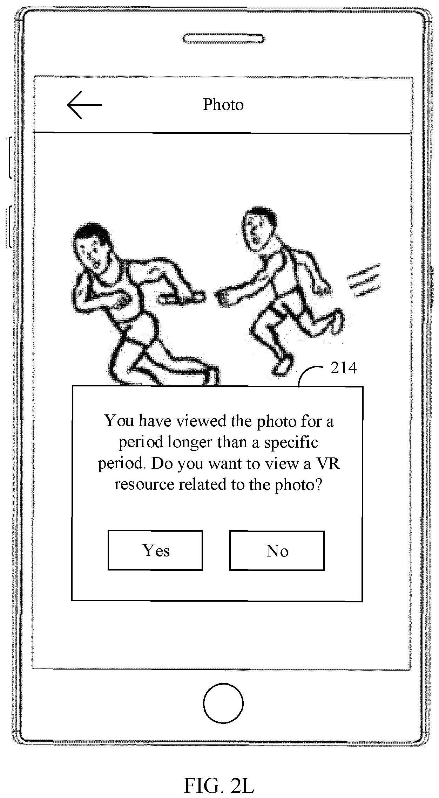

FIG. 2L shows a screen displayed by a terminal after the terminal detects that duration for which a user stays on a screen on which the user views a picture exceeds specific duration. The screen includes prompt information 214, a Yes button, and a No button. The prompt information 214 is used to prompt the user to choose whether to view a VR resource related to the picture.

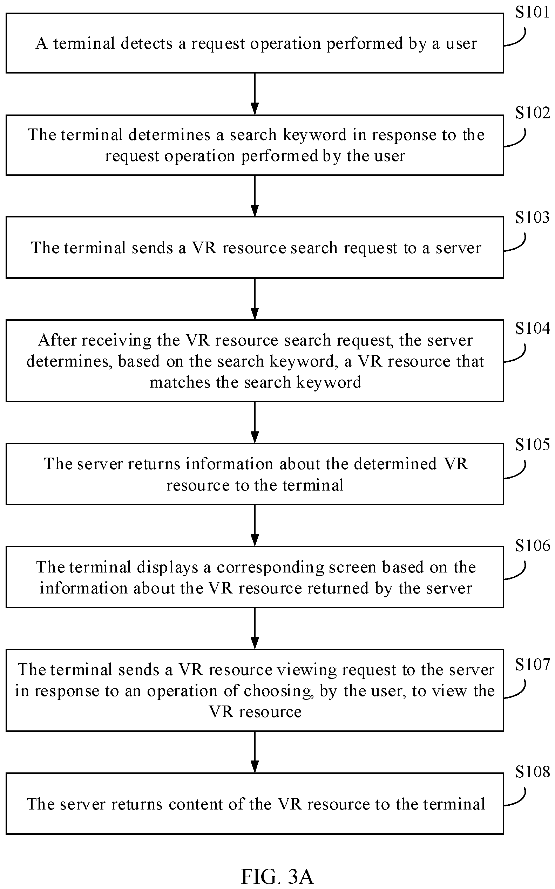

FIG. 3A is a schematic flowchart of a method for searching for a VR resource according to this application. The method specifically includes the following steps.

S101: A terminal detects a request operation performed by a user.

The request operation is requesting, by the user, to search for a VR resource related to a specific picture (a specific photo), and may be requesting to search for a common VR resource related to the specific picture, or may be specifically requesting to search for a VR resource related to a geographical location in the specific picture, or requesting to search for a VR resource related to a landmark building or a scenic spot in the specific picture, or requesting to search for a VR resource related to a logo icon in the specific picture, or requesting to search for a VR resource related to a person's portrait in the specific picture, or the like. This is not limited in this embodiment of this application.

In some embodiments, the request operation may be an operation, or may be a series of operations. For example, the request operation may be an operation such as double tapping, tapping, touching and holding, sliding, or selecting a menu option performed on a screen on which the specific picture is viewed. Alternatively, the request operation may include an operation of selecting the specific picture, opening a VR resource search menu, or selecting a corresponding option by the user. For example, FIG. 2B and FIG. 2C each show a screen displayed by the terminal after the terminal detects a request operation.

In some embodiments, the request operation may alternatively be considered as that when duration for which the user views the specific picture exceeds preset duration, the terminal may consider that the user needs to view the VR resource related to the picture. In other words, when detecting that the duration for which the user stays on a screen on which the user views the specific picture exceeds the preset duration, the terminal may consider by default that the user needs to search for the VR resource related to the picture.

Optionally, as shown in FIG. 2L, after detecting that the duration for which the user stays on the screen on which the user views the specific picture exceeds the preset duration, the terminal may display the prompt information 214, to prompt the user to choose whether to search for the VR resource related to the specific picture.

Optionally, before this step, the terminal needs to enable, by default, or receive an instruction from the user to enable a function of "automatically querying a VR resource related to a picture/photo" of the terminal. For example, FIG. 2K shows a screen displayed by a terminal in response to detecting an operation of tapping the button 213 in "Settings" by a user.

S102: The terminal determines a search keyword in response to the request operation performed by the user.

In some embodiments, the terminal extracts corresponding feature information of the picture from the specific picture selected by the user, where the feature information of the picture may be used as the search keyword.

The feature information of the picture includes but is not limited to a geographical location or longitude and latitude data of a photographing location of the picture, a name or location information of a landmark building or a scenic spot included in the picture, logo icon information included in the picture, person information included in the picture, or the like.

In some embodiments, the terminal may obtain the geographical location or the latitude and longitude data of the photographing location of the picture from the information about the picture. Based on an image recognition technology, the terminal may automatically extract an image from a specific picture, and compare the image with an image of a landmark building or a scenic spot that is stored in the terminal or stored in a third-party device, to determine landmark building information or scenic spot information included in the specific picture. For example, the terminal may determine a label or the like corresponding to the landmark building or the scenic spot. The label may be a name of the landmark building or the scenic spot, for example, Tiananmen or Great Wall. The label may alternatively be a classification of the landmark building or the scenic spot, for example, a humanistic scenic spot or natural scenery. Similarly, based on an image recognition technology, the terminal may automatically extract an image from a specific picture, and compare the image with a logo icon that is of a group organization/social institution and that is stored in the terminal or stored in a third-party device, to determine logo icon information included in the specific picture. For example, the terminal may determine a label or the like corresponding to the logo icon. For example, the label may be a name that is of the group organization/social institution and group organization/social institution and that corresponds to the logo icon, or an industry to which the group organization/social institution belongs. Alternatively, based on a facial recognition technology, the terminal may automatically extract an image from a specific picture, and compare the image with a person's portrait stored in the terminal or stored in a third-party device, to determine person information included in the specific picture. For example, the terminal may determine a label or the like corresponding to a person. For example, the label may be a name of the name, or may be an industry to which the person belongs.

Optionally, the terminal may determine that all pieces of extracted feature information of the picture are the search keywords. Alternatively, the terminal may determine a specific quantity of pieces of feature information of the picture as the search keyword based on a sequence of extracting the feature information of the picture. Alternatively, the terminal may determine the search keyword from the extracted feature information of the picture in a default sequence. A manner of determining the keyword is not limited in this embodiment of this application.

Optionally, the terminal may alternatively determine the search keyword based on a request of the user. For example, if the user requests to search for the VR resource related to the geographical location in the specific picture, the terminal determines the geographical location (or longitude and latitude data or the like) extracted from the specific picture as the search keyword. If the user requests to search for the VR resource related to the landmark building or the scenic spot in the specific picture, the terminal determines content of the label corresponding to the landmark building or the scenic spot extracted from the specific picture as the search keyword. If the user requests to search for the VR resource related to the logo icon in the specific picture, the terminal determines content of the label corresponding to the logo icon extracted from the specific picture as the search keyword. If the user requests to search for the VR resource related to the person's portrait in the specific picture, the terminal determines content of the label corresponding to the person's portrait extracted from the specific picture as the search keyword.

S103: The terminal sends a VR resource search request to a server.

The search request carries the search keyword, and the search keyword may be text information, picture information, character information, character string information, or the like. The search request may carry information about the search keyword by using the hypertext transfer protocol (HyperText Transfer Protocol, HTTP) protocol, or a text transmission carrier such as JavaScript object notation (JavaScript Object Notation, JSON) or an extensible markup language (XML).

The server may be an application server storing VR resources, or may be a management server corresponding to a storage system storing VR resources. The management server may be configured to: manage VR resources and provide a service of performing exact matching for a VR resource. In addition, the storage system may include a distributed storage server that is specially configured to store massive VR resources. The server herein may alternatively be another electronic device storing VR resources. A form of the server is not limited in this embodiment of this application.

S104: After receiving the VR resource search request, the server determines, based on the search keyword, a VR resource that matches the search keyword.

Each VR resource includes one or more attributes, for example, a program name, a producer, a production time, and a classification label. The classification label may include a geographical location (or longitude and latitude), a name or a classification of a landmark building/scenic spot, a name of a person or an industry to which the person belongs, information about a group organization/social institution, or the like. After receiving the VR resource search request sent by the terminal, the server compares the search keyword carried in the request with content of a classification label of a VR resource in a VR resource library (a server storing VR resources or a distributed memory storing VR resources), to determine a VR resource that meets a condition as the VR resource that matches the search keyword.

In some embodiments, the search keyword carried in the VR resource search request is longitude and latitude, which is a physical coordinate value and is denoted as P1 (x, y). However, a video in the VR resource includes a plurality of picture frames, and each picture frame includes one physical coordinate value. In this case, the video in the VR resource corresponds to a plurality of physical coordinate values denoted as P2i (xi, yi), where i is a positive integer greater than 0. The plurality of physical coordinate values form a planar geographical area. In this case, during search for the VR resource that matches the keyword, whether the planar geographical area formed by the VR resource includes the longitude and latitude included in the keyword may be determined. If the planar geographical area formed by the VR resource includes the longitude and latitude included in the keyword, it may be determined that the VR resource matches the keyword. For example, coordinate values of n boundary points are extracted from P2i (xi, yi), for example, P21 (x1, y1) to P2n (xn, yn). A longitude value in the coordinate values of the n boundary points is compared with a longitude value of the keyword, and a latitude value in the coordinate values of the n boundary points is compared with a latitude value of the keyword, to determine whether a plane formed by the n boundary points includes the longitude and latitude included in the search keyword, namely, P1 (x, y). If the plane formed by the n boundary points includes the longitude and latitude included in the search keyword, the VR resource may be determined as a found VR resource that matches the search keyword.

In some embodiments, in step S102, based on an image recognition technology, the terminal may automatically extract a picture of a landmark building/scenic spot or a picture of a logo icon from the specific picture, and use the picture of the landmark building/scenic spot or the picture of the logo icon as the search keyword. Similarly, based on a facial recognition technology, the terminal automatically extracts a picture of a person's portrait from the specific picture, and uses the picture of the person's portrait as the search keyword. In this case, after receiving the VR resource search request that the picture is used as the search keyword, the server compares the picture used as the search keyword with an image locally stored in the server or stored in a third-party device, and further determines a label corresponding to the picture used as the search keyword. The label may be specifically a name or a classification of a landmark building/scenic spot, a name of a group organization/social institution or an industry to which the group organization/social institution belongs, a name of a person or an industry to which the person belongs, or the like. The server compares content of the label with content of a classification label of a VR resource in a VR resource library (a server storing VR resources or a distributed memory storing VR resources), to determine a VR resource that meets a condition as the VR resource that matches the search keyword. It should be noted that specific operations performed by the terminal and the server are not limited in this embodiment of this application.

S105: The server returns information about the determined VR resource to the terminal.

In some embodiments, the information about the VR resource returned by the server may correspond to one VR resource on the server. The information about the VR resource includes but is not limited to a uniform resource identifier (Uniform Resource Identifier, URI) of the VR resource, a uniform resource locator (Uniform Resource Locator, URL) of the VR resource, and some basic information of the VR resource, for example, a program name, a producer, a production time, information about a classification label, a poster, and some image pictures in the VR resource.

S106: The terminal displays a corresponding screen based on the information about the VR resource returned by the server.

In some embodiments, the terminal displays a URI or a URL of the found VR resource based on the information about the VR resource returned by the server, or the terminal may display any several pieces of information such as a poster, a program name, a producer, a production time, an introduction, and some image pictures in the VR resource corresponding to the found VR resource. Content that is of the VR resource and that is displayed by the terminal is not limited in this application.

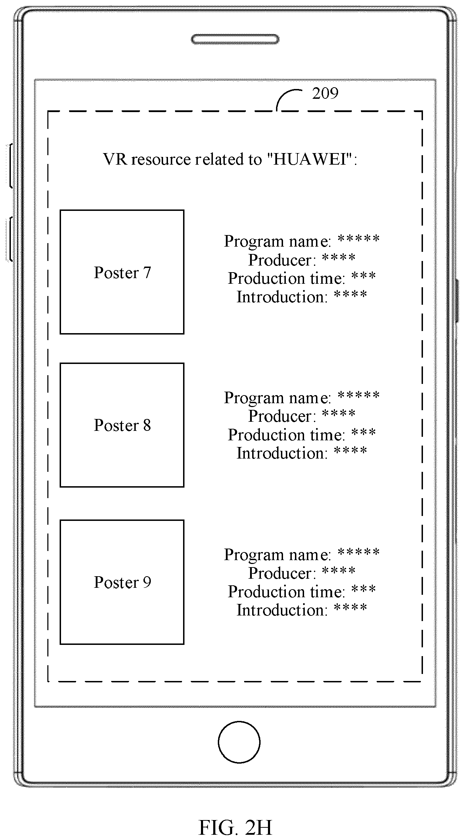

For example, FIG. 2D, FIG. 2F, FIG. 2H, and FIG. 2J each show a screen that is displayed by the terminal and that includes a found VR resource list.

S107: The terminal sends a VR resource viewing request to the server in response to an operation of choosing, by the user, to view the VR resource.

In some embodiments, the operation of choosing, by the user, to view the VR resource may be, for example, tapping a poster or a name of a VR resource by the user. After receiving the operation of choosing, by the user, to view the VR resource, the terminal sends the VR resource viewing request to the server.

S 108: The server returns the content of the VR resource to the terminal.

In some embodiments, the terminal may play, by using a browser or a video player, the VR resource returned by the server.

It can be learned that in this application, the terminal may automatically extract the feature information from the picture, and then search, based on the feature information of the picture, for the VR resource related to the feature information, to simplify a user operation, improve search accuracy, and improve user experience.

Optionally, if the terminal locally stores the VR resource, the terminal may also locally search for the VR resource related to the specific picture. In other words, steps S103 to S108 may be replaced with steps S109 and S110.

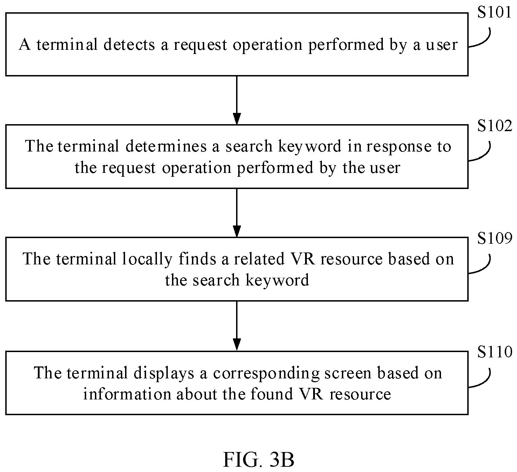

FIG. 3B is a schematic flowchart of a method for obtaining a VR resource according to this application. The method includes S101, S102, and S109. Details are as follows:

S109: The terminal locally finds a related VR resource based on the determined search keyword.

For a specific matching process, refer to a matching process described in step S104. Details are not described herein again.

S110: The terminal displays a corresponding screen based on information about the found VR resource.

In some embodiments, the terminal displays a URI or a URL of the VR resource based on the information about the found VR resource, or the terminal may display any several pieces of information such as a poster, a program name, a producer, a production time, an introduction, and some image pictures in the VR resource corresponding to the found VR resource. Content that is of the VR resource and that is displayed by the terminal is not limited in this application.

For example, FIG. 2D, FIG. 2F, FIG. 2H, and FIG. 2J each show a screen that is displayed by the terminal and that includes a found VR resource list.

In this way, the terminal can directly find, locally based on the specific picture, the VR resource related to the specific picture without accessing a network, to improve accuracy and convenience of searching for the VR resource by the user.

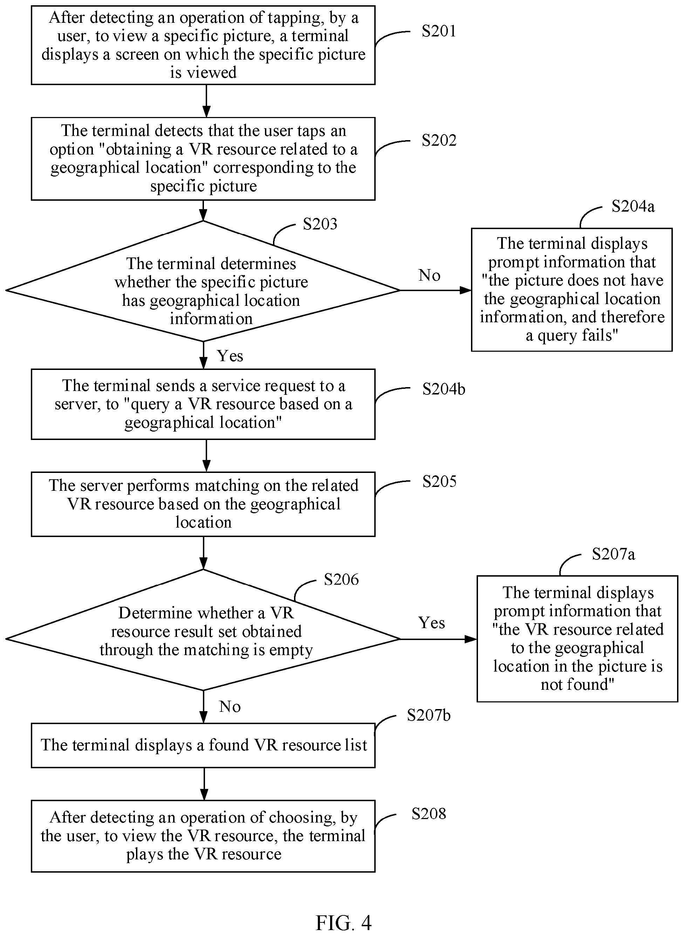

With reference to a specific use scenario, FIG. 4 to FIG. 8 each are a schematic flowchart in which the terminal searches, according to an instruction of the user, for a VR resource related to a picture.

FIG. 4 is a schematic flowchart of a method for searching, based on a geographical location in a picture, for a VR resource related to the picture according to an embodiment of this application. The method specifically includes the following steps.

S201: After detecting an operation of tapping, by the user, to view a specific picture, the terminal displays a screen on which the specific picture is viewed.

For example, the operation of tapping, by the user, to view the specific picture may be tapping to view the specific picture (the photo 201) on the screen shown in FIG. 2A.

S202: The terminal detects an operation of tapping, by the user, an option "obtaining a VR resource related to a geographical location" corresponding to the specific picture.

For example, the operation of tapping, by the user, the option "obtaining a VR resource related to a geographical location" corresponding to the specific picture may be choosing, by the user on the screen on which the user views the specific picture, to open a VR resource search menu, for example, the option menu 202 shown in FIG. 2C. Further, the user selects the option "obtaining a VR resource related to a geographical location".

S203: The terminal determines whether the specific picture has geographical location information. Step S204b is performed if the specific picture has the geographical location information; or step S204a is performed if the specific picture does not have the geographical location information.

For example, the terminal may search information about the specific picture for the geographical location information of the specific picture.

S204a: The terminal displays prompt information, to prompt the user with a fact that "the picture does not have the geographical location information, and therefore a query fails".

S204b: The terminal sends a server request to the server, to request the server to query, based on the geographical location, a VR resource related to the specific picture.

The request carries the geographical location information of the specific picture.

For this step, refer to steps S102 and S103. Details are not described herein again.

S205: The server performs, based on the geographical location, matching on the VR resource related to the specific picture.

For this step, refer to step S104. Details are not described herein again.

S206: The server determines whether a VR resource result set obtained through the matching is empty. Step S207a is performed if the VR resource result set obtained through the matching is empty; or step S207b is performed if the VR resource result set obtained through the matching is not empty.

S207a: The server sends, to the terminal, information indicating that the VR resource result set obtained through the matching is empty, and the terminal displays prompt information, to prompt the user with a fact that "the VR resource related to the geographical location in the picture is not found".

S207b: The server sends a found VR resource result to the terminal, and the terminal displays a found VR resource list.

For this step, refer to step S106. Details are not described herein again. For example, FIG. 2D shows a screen that is displayed by the terminal and that includes the found VR resource list.

S208: After the terminal detects an operation of choosing, by the user, to view any VR resource in the VR resource list, the terminal plays the VR resource.

For this step, refer to steps S107 and S108. Details are not described herein again.

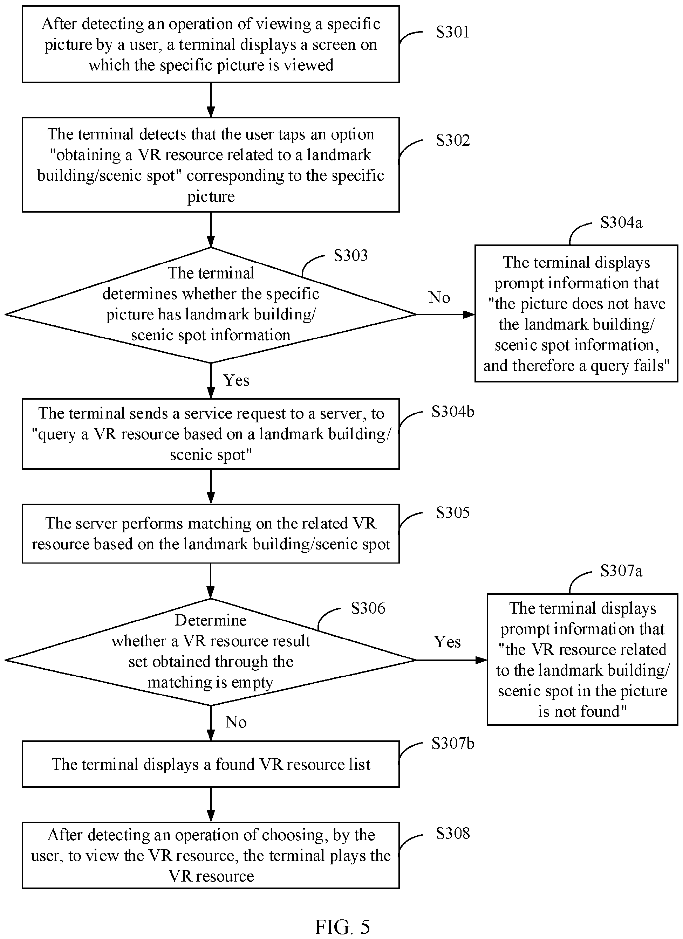

FIG. 5 is a schematic flowchart of a method in which a terminal searches, based on a landmark building/scenic spot in a picture, for a VR resource related to the picture according to an embodiment of this application. The method specifically includes the following steps.

S301: After detecting an operation of tapping, by the user, to view a specific picture, the terminal displays a screen on which the specific picture is viewed.

For example, the operation of tapping, by the user, to view the specific picture may be tapping to view the specific picture on the screen shown in FIG. 2A.

S302: The terminal detects an operation of tapping, by the user, an option "obtaining a VR resource related to a landmark building/scenic spot" corresponding to the specific picture.

For example, the operation of tapping, by the user, the option "obtaining a VR resource related to a landmark building/scenic spot" corresponding to the specific picture may be choosing, by the user on the screen on which the user views the specific picture, to open a VR resource search menu, for example, the option menu 205 shown in FIG. 2C. Further, the user selects the option "obtaining a VR resource related to a geographical location".

S303: The terminal determines whether the specific picture has landmark building/scenic spot information. Step S304b is performed if the specific picture has the landmark building/scenic spot information; or step S304a is performed if the specific picture does not have the landmark building/scenic spot information.

For example, based on an image recognition technology, the terminal may automatically extract an image from a specific picture, and compare the image with an image of a landmark building or a scenic spot that is stored in the terminal or stored in a third-party device, to determine landmark building information or scenic spot information included in the specific picture.

S304a: The terminal displays prompt information, to prompt the user with a fact that "the picture does not have the building/scenic spot information, and therefore a query fails".

S304b: The terminal sends a server request to the server, to request the server to query, based on the building/scenic spot information, a VR resource related to the specific picture.

The request carries the building/scenic spot information of the specific picture.

For this step, refer to steps S102 and S103. Details are not described herein again.

S305: The server performs, based on the building/scenic spot information, matching on the VR resource related to the specific picture.

For this step, refer to step S104. Details are not described herein again.

S306: The server determines whether a VR resource result set obtained through the matching is empty. Step S307a is performed if the VR resource result set obtained through the matching is empty; or step S307b is performed if the VR resource result set obtained through the matching is not empty.

S307a: The server sends, to the terminal, information indicating that the VR resource result set obtained through the matching is empty, and the terminal displays prompt information, to prompt the user with a fact that "the VR resource related to the building/scenic spot information of the picture is not found".

S307b: The server sends a found VR resource result to the terminal, and the terminal displays a found VR resource list.

For this step, refer to step S106. Details are not described herein again. For example, FIG. 2F shows a screen that is displayed by the terminal and that includes the found VR resource list.

S308: After the terminal detects an operation of choosing, by the user, to view any VR resource in the VR resource list, the terminal plays the VR resource.

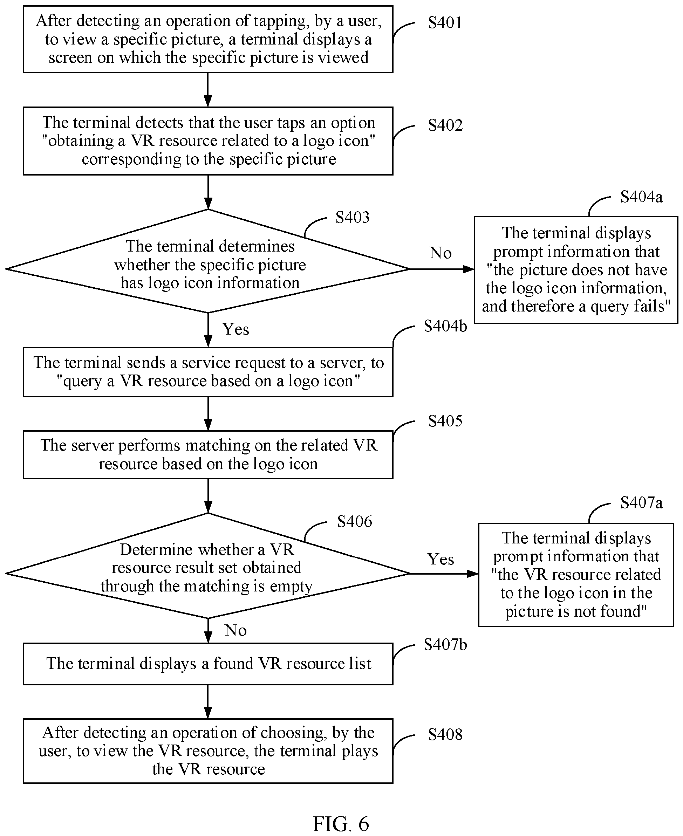

For this step, refer to steps S107 and S108. Details are not described herein again. FIG. 6 is a schematic flowchart of a method in which a terminal searches, based on a logo icon in a picture, for a VR resource related to the picture according to an embodiment of this application. The method specifically includes the following steps.

S401: After detecting an operation of tapping, by the user, to view a specific picture, the terminal displays a screen on which the specific picture is viewed.

For example, the operation of tapping, by the user, to view the specific picture may be tapping to view the specific picture on the screen shown in FIG. 2A.

S402: The terminal detects an operation of tapping, by the user, an option "obtaining a VR resource related to a logo icon" corresponding to the specific picture.

For example, the operation of tapping, by the user, the option "obtaining a VR resource related to a logo icon" corresponding to the specific picture may be choosing, by the user on the screen on which the user views the specific picture, to open a VR resource search menu, for example, the option menu 207 shown in FIG. 2G. Further, the user selects the option "obtaining a VR resource related to a logo icon".

S403: The terminal determines whether the specific picture has logo icon information. Step S404b is performed if the specific picture has the logo icon information; or step S404a is performed if the specific picture does not have the logo icon information.

For example, based on an image recognition technology, the terminal may automatically extract an image from a specific picture, and compare the image with an image of a landmark building or a scenic spot that is stored in the terminal or stored in a third-party device, to determine logo icon information included in the specific picture.

S404a: The terminal displays prompt information, to prompt the user with a fact that "the picture does not have the logo icon information, and therefore a query fails".

S404b: The terminal sends a server request to the server, to request the server to query, based on the logo icon information, a VR resource related to the specific picture.

The request carries the logo icon information of the specific picture.

For this step, refer to steps S102 and S103. Details are not described herein again.

S405: The server performs, based on the logo icon information, matching on the VR resource related to the specific picture.

For this step, refer to step S104. Details are not described herein again.

S406: The server determines whether a VR resource result set obtained through the matching is empty. Step S407a is performed if the VR resource result set obtained through the matching is empty; or step S407b is performed if the VR resource result set obtained through the matching is not empty.

S407a: The server sends, to the terminal, information indicating that the VR resource result set obtained through the matching is empty, and the terminal displays prompt information, to prompt the user with a fact that "the VR resource related to the logo icon information of the picture is not found".

S407b: The server sends a found VR resource result to the terminal, and the terminal displays a found VR resource list.

For this step, refer to step S106. Details are not described herein again. For example, FIG. 2H shows a screen that is displayed by the terminal and that includes the found VR resource list.

S408: After the terminal detects an operation of choosing, by the user, to view any VR resource in the VR resource list, the terminal plays the VR resource.

For this step, refer to steps S107 and S108. Details are not described herein again.

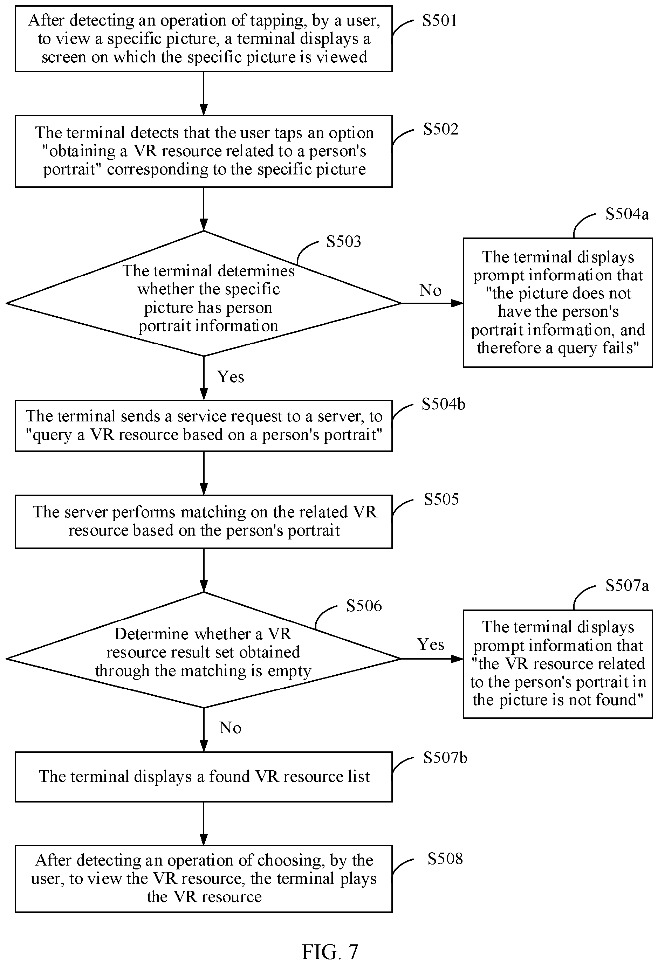

FIG. 7 is a schematic flowchart of a method in which a terminal searches, based on a person's portrait in a picture, for a VR resource related to the picture according to an embodiment of this application. The method specifically includes the following steps.

S501: After detecting an operation of tapping, by the user, to view a specific picture, the terminal displays a screen on which the specific picture is viewed.

For example, the operation of tapping, by the user, to view the specific picture may be tapping to view the specific picture on the screen shown in FIG. 2A.

S502: The terminal detects an operation of tapping, by the user, an option "obtaining a VR resource related to a person's portrait" corresponding to the specific picture.

For example, the operation of tapping, by the user, the option "obtaining a VR resource related to a person's portrait" corresponding to the specific picture may be choosing, by the user on the screen on which the user views the specific picture, to open a VR resource search menu, for example, the option menu 210 shown in FIG. 2I. Further, the user selects the option "obtaining a VR resource related to a person's portrait".

S503: The terminal determines whether the specific picture has person's portrait information. Step S504b is performed if the specific picture has the person's portrait information; or step S504a is performed if the specific picture does not have the person's portrait information.

For example, based on an image recognition technology, the terminal may automatically extract an image from a specific picture, and compare the image with an image of a landmark building or a scenic spot that is stored in the terminal or stored in a third-party device, to determine person's portrait information included in the specific picture.

S504a: The terminal displays prompt information, to prompt the user with a fact that "the picture does not have the person's portrait information, and therefore a query fails".

S504b: The terminal sends a server request to the server, to request the server to query, based on the person's portrait information, a VR resource related to the specific picture.

The request carries the person's portrait information of the specific picture.

For this step, refer to steps S102 and S103. Details are not described herein again.

S505: The server performs, based on the person's portrait information, matching on the VR resource related to the specific picture.

For this step, refer to step S104. Details are not described herein again.

S506: The server determines whether a VR resource result set obtained through the matching is empty. Step S507a is performed if the VR resource result set obtained through the matching is empty; or step S507b is performed if the VR resource result set obtained through the matching is not empty.

S507a: The server sends, to the terminal, information indicating that the VR resource result set obtained through the matching is empty, and the terminal displays prompt information, to prompt the user with a fact that "the VR resource related to the person's portrait information of the picture is not found".

S507b: The server sends a found VR resource result to the terminal, and the terminal displays a found VR resource list.

For this step, refer to step S106. Details are not described herein again. For example, FIG. 2J shows a screen that is displayed by the terminal and that includes the found VR resource list.

S508: After the terminal detects an operation of choosing, by the user, to view any VR resource in the VR resource list, the terminal plays the VR resource.

For this step, refer to steps S107 and S108. Details are not described herein again.

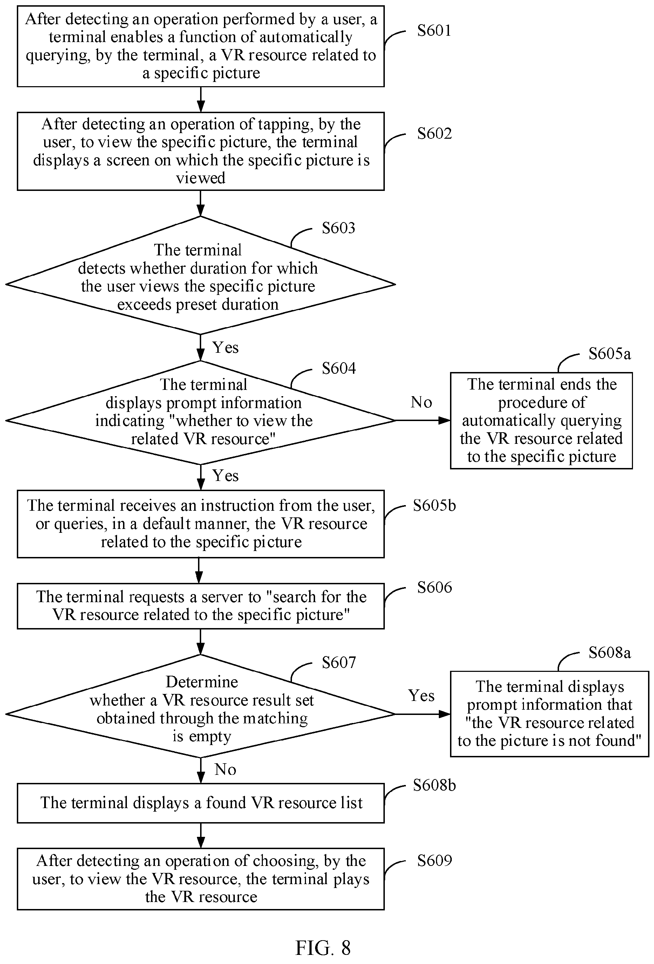

FIG. 8 is a schematic flowchart of a method in which a terminal automatically searches for a related VR resource based on a picture according to an embodiment of this application. The method specifically includes the following steps.

S601: After detecting an operation performed by a user, the terminal enables a function of automatically querying, by the terminal, a VR resource related to a specific picture.

S602: After detecting an operation of tapping, by the user, to view the specific picture, the terminal displays a screen on which the specific picture is viewed.

S603: The terminal detects whether duration for which the terminal displays the specific picture exceeds preset duration.

S604: The terminal displays prompt information, to prompt the user to enter an indication indicating "whether to view the VR resource related to the picture". If the terminal detects that the indication entered by the user is "not viewing the VR resource related to the picture", the terminal performs step S605a. If the terminal detects that the indication entered by the user is "viewing the VR resource related to the picture", the terminal performs step S605b.

S605a: The terminal ends the procedure of automatically querying the VR resource related to the specific picture.

For example, the terminal may end a current process of automatically querying the VR resource related to the specific picture, and the terminal re-detects whether duration for which the user views the specific picture exceeds preset duration, that is, performs step S603. In other words, the terminal recounts the time for which the user views the specific picture, and determines whether the duration for which the user views the specific picture exceeds the preset duration. Optionally, the terminal may alternatively end automatically searching the specific picture for the VR resource related to the specific picture. In other words, the terminal no longer performs counting for the specific picture, and determines whether the duration for which the user views the specific picture exceeds the preset duration. This is not limited in this embodiment of this application.

S605b: The terminal queries the VR resource related to the specific picture.

The VR resource that is related to the specific picture and that is queried by the terminal includes but is not limited to any one or more of a VR resource related to an address location in the specific picture, a VR resource related to a landmark building/scenic spot in the specific picture, a VR resource related to a logo icon in the specific picture, and a VR resource related to a person's portrait in the specific picture. This is not limited in this embodiment of this application.

S606: The terminal requests the server to search for the VR resource related to the specific picture.

S607: The server performs matching on a corresponding VR resource based on the request sent by the terminal, and determines whether a VR resource set obtained through the matching is empty. Step S607a is performed if the VR resource result set obtained through the matching is empty; or step S607b is performed if the VR resource result set obtained through the matching is not empty.

S608a: The server sends, to the terminal, information indicating that the VR resource result set obtained through the matching is empty, and the terminal displays prompt information, to prompt the user with a fact that "the VR resource related to the picture is not found".

S608b: The server sends a found VR resource result to the terminal, and the terminal displays a found VR resource list.

For this step, refer to step S106. Details are not described herein again.

S609: After the terminal detects an operation of choosing, by the user, to view any VR resource in the VR resource list, the terminal plays the VR resource.

For this step, refer to steps S107 and S108. Details are not described herein again.

It may be understood that to implement the foregoing functions, the terminal or the like includes corresponding hardware structures and/or software modules for performing the functions. A person skilled in the art should be easily aware that units, algorithms, and steps in the examples described with reference to the embodiments disclosed in this specification may be implemented by hardware or a combination of hardware and computer software in the embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of the embodiments of the present invention.

In the embodiments of this application, the terminal or the like may be divided into function modules based on the foregoing method examples. For example, each function module may be obtained through division based on each corresponding function, or two or more functions may be integrated into one processing module. The integrated module may be implemented in a form of hardware, or may be implemented in a form of a software function module. It should be noted that in the embodiments of this application, division into the modules is an example and is merely logical function division, and may be other division in an actual implementation.

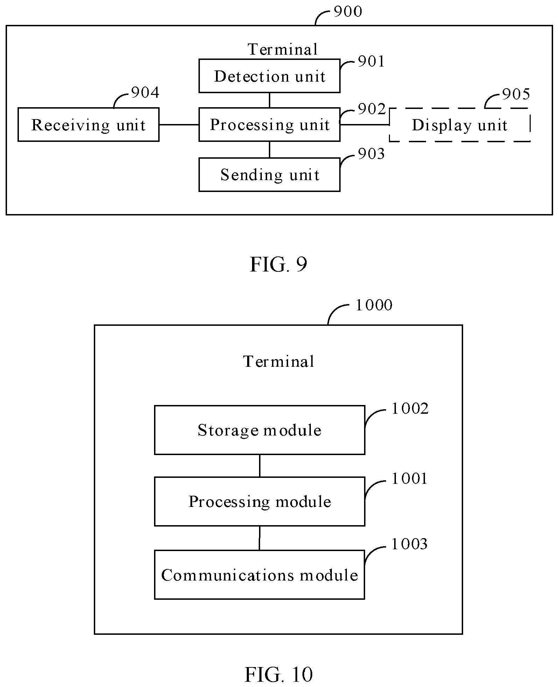

When each function module is obtained through division based on each corresponding function, FIG. 9 is a possible schematic structural diagram of the terminal in the foregoing embodiment. As shown in FIG. 9, the terminal 900 includes a detection unit 901, a processing unit 902, a sending unit 903, and a receiving unit 904.

The detection unit 901 is configured to support the terminal in receiving a first operation performed by a user on a first picture, and a second operation performed by the user to select a VR resource from a VR resource list, and/or is configured to perform another process of the technology described in this specification. The processing unit 902 is configured to support the terminal in generating a first request based on the first picture, where details are as follows: obtaining feature information of the first picture; generating the first request based on the feature information of the first picture; and when the second operation is detected, obtaining the VR resource selected by the user, and/or is configured to perform another process of the technology described in this specification. The sending unit 903 is configured to support the terminal in sending the first request to a VR server, and/or is configured to perform another process of the technology described in this specification. The receiving unit 904 is configured to support the terminal in receiving a VR resource returned by the VR server based on the first request, and/or is configured to perform another process of the technology described in this specification.

Further, the terminal 900 may further include a display unit 905. The display unit 905 is configured to support the terminal in displaying a list of one or more VR resources found by the VR server through matching based on the first request, and/or is configured to perform another process of the technology described in this specification.

All related content of the steps in the foregoing method embodiments may be cited in function descriptions of corresponding function modules. Details are not described herein again.

When an integrated unit is used, the detection unit 901 and the processing unit 902 may be integrated together, and may be a processing module of the terminal. The sending unit 903 and the receiving unit 904 may be integrated together, and may be a communications module of the terminal, for example, an RF circuit, a Wi-Fi module, or a Bluetooth module.

FIG. 10 is a possible schematic structural diagram of the terminal in the foregoing embodiment. The terminal 1000 includes a processing module 1001, a storage module 1002, and a communications module 1003. The processing module 1001 is configured to: control and manage an action of the terminal. The storage module 1002 is configured to store program code and data that are of the terminal. The communications module 1003 is configured to communicate with another terminal. The processing module 1001 may be a processor or a controller, for example, may be a central processing unit (Central Processing Unit, CPU), a general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The processing module 1001 may implement or execute various example logical blocks, modules, and circuits described with reference to content disclosed in the present invention. The processor may be a combination of processors implementing a computing function, for example, a combination of one or more microprocessors, or a combination of a DSP and a microprocessor. The communications module 1303 may be a transceiver, a transceiver circuit, a communications interface, or the like. The storage module 1002 may be a memory.

When the processing module 1001 is a processor (for example, the processor 101 shown in FIG. 1B), the communications module 1003 is an RF transceiver circuit (for example, the radio frequency circuit 102 shown in FIG. 1B), and the storage module 1002 is a memory (for example, the memory 103 shown in FIG. 1B), the terminal provided in this embodiment of this application may be the terminal 100 shown in FIG. IB. The communications module 1003 may include not only an RF circuit, but also a Wi-Fi module and a Bluetooth module. Communications modules such as the RF circuit, the Wi-Fi module, and the Bluetooth module may be collectively referred to as a communications interface. The processor, the communications interface, and the memory may be coupled together by using a bus.

In the descriptions in the foregoing implementations, a person skilled in the art may clearly understand that for the purpose of convenient and brief description, division into the foregoing function modules is merely used as an example for description. In actual application, the foregoing functions can be allocated to different function modules for implementation based on a requirement. To be specific, an inner structure of an apparatus is divided into different function modules to implement all or some of the functions described above. For a detailed working process of the foregoing described system, apparatus, and unit, refer to a corresponding process in the foregoing method embodiments. Details are not described herein again.

In the several embodiments provided in this application, it should be understood that the disclosed system, apparatus, and method may be implemented in another manner. For example, the described apparatus embodiment is merely an example. For example, division into the modules or units is merely logical function division and may be other division in an actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected based on an actual requirement to achieve the objectives of the solutions of the embodiments.

In addition, function units in the embodiments of this application may be integrated into one processing unit, or each of the units may exist alone physically, or two or more units may be integrated into one unit. The integrated unit may be implemented in a form of hardware, or may be implemented in a form of a software function unit.

When the integrated unit is implemented in a form of a software function unit and sold or used as an independent product, the integrated unit may be stored in a computer readable storage medium. Based on such an understanding, the technical solutions in this application essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) or a processor to perform all or some of the steps of the methods in the embodiments of this application. The foregoing storage medium includes any medium that can store program code, such as a flash memory, a removable hard disk, a read-only memory, a random access memory, a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A method for obtaining a virtual reality, VR, resource by a terminal, comprising:
detecting, by the terminal, a first operation performed by a user on a first picture;
generating, by the terminal, a first request based on the first picture in response to the first operation, wherein the first request is used to request to obtain a virtual reality VR resource corresponding to the first picture;
sending, by the terminal, the first request to a VR server; and
receiving, by the terminal, a VR resource returned by the VR server based on the first request.

2. The method according to claim 1, wherein the VR server is an application server storing VR resources, or a management server corresponding to a storage device storing VR resources.

3. The method according to claim 1 or 2, wherein the detecting, by the terminal, a first operation performed by a user on a first picture is specifically:
detecting, by the terminal, the first operation on a first screen, wherein the first screen is a browsing screen of the first picture.

4. The method according to claim 3, wherein the detecting the first operation on a first screen comprises:
detecting one of the following operations at any location of the first screen: touching and holding, tapping, double tapping, and dragging; or
detecting an operation of selecting an option in a preset single-level or multi-level menu on the first screen; or
when a function of automatically searching for a VR resource of the terminal is enabled, detecting that the first picture is in a browsed state for more than preset duration.

5. The method according to claim 1 or 2, wherein the detecting, by the terminal, a first operation performed by a user on a first picture is specifically:
detecting, by the terminal, the first operation on a second screen, wherein a file of the first picture is selected on the second screen, and the second screen is a screen on which the file of the first picture is displayed.

6. The method according to claim 5, wherein the detecting, by the terminal, the first operation on a second screen comprises:
detecting one of the following operations at a preset location of the second screen: touching and holding, tapping, and double tapping; or
detecting an operation of selecting an option in a preset single-level or multi-level menu on the second screen.

7. The method according to any one of claims 1 to 6, wherein the generating, by the terminal, a first request based on the first picture comprises:
obtaining, by the terminal, feature information of the first picture; and
generating, by the terminal, the first request based on the feature information of the first picture, wherein the first request carries the feature information of the first picture.

8. The method according to claim 7, wherein the feature information comprises any one or more of geographical location information, landmark building information, scenic spot information, a logo icon, and person's portrait information.

9. The method according to any one of claims 1 to 8, wherein the virtual reality VR resource comprises any one or more of a VR video, a VR game, and a VR movie.

10. The method according to any one of claims 1 to 9, wherein the VR resource returned by the VR server based on the first request comprises a VR resource list comprising one or more VR resources, and the one or more VR resources are VR resources found by the VR server through matching based on the first request; and
the method further comprises: displaying, by the terminal, the VR resource list.

11. The method according to claim 10, wherein the method further comprises:
receiving, by the terminal, a second operation performed by the user, wherein the second operation is selecting a VR resource from the VR resource list by the user; and
obtaining, by the terminal in response to the second operation, the VR resource selected by the user.

12. A terminal, comprising:
a detection unit, configured to detect a first operation performed by a user on a first picture;
a processing unit, configured to generate a first request based on the first picture in response to the first operation, wherein the first request is used to request to obtain a virtual reality VR resource corresponding to the first picture;
a sending unit, configured to send the first request to a VR server; and
a receiving unit, configured to receive a VR resource returned by the VR server based on the first request.

13. The terminal according to claim 12, wherein the VR server is an application server storing VR resources, or a management server corresponding to a storage device storing VR resources.

14. The terminal according to claim 12 or 13, wherein
the detection unit is specifically configured to detect the first operation on a first screen, wherein the first screen is a browsing screen of the first picture.

15. The terminal according to claim 14, wherein the first operation comprises:
one of the following operations detected at any location of the first screen: touching and holding, tapping, double tapping, and dragging; or
an operation of selecting an option in a preset single-level or multi-level menu on the first screen; or
when a function of automatically searching for a VR resource of the terminal is enabled, detecting that the first picture is in a browsed state for more than preset duration.

16. The terminal according to claim 12 or 13, wherein
the detection unit is specifically configured to detect the first operation on a second screen, wherein a file of the first picture is selected on the second screen, and the second screen is a screen on which the file of the first picture is displayed.

17. The terminal according to claim 16, wherein the first operation comprises:
one of the following operations detected at any location of the second screen: touching and holding, tapping, and double tapping; or
an operation of selecting an option in a preset single-level or multi-level menu on the second screen.

18. The terminal according to any one of claims 12 to 17, wherein that a processing unit generates a first request based on the first picture is specifically:
obtaining, by the processing unit, feature information of the first picture; and generating the first request based on the feature information of the first picture, wherein the first request carries the feature information of the first picture.

19. The terminal according to claim 18, wherein the feature information comprises any one or more of geographical location information, landmark building information, scenic spot information, a logo icon, and person's portrait information.

20. The terminal according to any one of claims 12 to 19, wherein the virtual reality VR resource comprises any one or more of a VR video, a VR game, and a VR movie.

21. The terminal according to any one of claims 12 to 20, wherein the VR resource returned by the VR server based on the first request comprises:
a VR resource list comprising one or more VR resources, wherein the one or more VR resources are VR resources found by the VR server through matching based on the first request; and
the terminal further comprises:
a display unit, configured to display the VR resource list.

22. The terminal according to claim 21, wherein
the detection unit is further configured to detect a second operation performed by the user, wherein the second operation is selecting a VR resource from the VR resource list by the user; and
the processing unit is further configured to: when the second operation is detected, obtain the VR resource selected by the user.

23. A terminal, comprising a processor, a memory, and a touchscreen, wherein the memory and the touchscreen are coupled to the processor, the memory is configured to store computer program code, the computer program code comprises a computer instruction, and the processor reads the computer instruction from the memory to perform the method according to any one of claims 1 to 11.

24. A computer storage medium, comprising a computer instruction, wherein when the computer instruction is run on a terminal, the terminal is enabled to perform the method according to any one of claims 1 to 11.

25. A computer program product, wherein when the computer program product is run on a computer, the computer is enabled to perform the method according to any one of claims 1 to 11.
